# EUROPEAN PATENT APPLICATION

(11) **EP 0 556 750 A1**
(43) Date of publication of application: **25.08.1993**
(21) Application number: 93102271.9
(22) Date of filing: 12.02.1993
(51) Int. Cl.: A47B 53/02, B65G 1/10

(54) **Improvements relating to surface mounted track systems**

(30) Priority: 20.02.1992 GB 9203602
(71) Applicant: WAGON STORAGE PRODUCTS LIMITED, Telford, Shropshire TF7 4LN (GB)
(72) Inventor: Deakin,Rex, West Midlands DY6 9SP (GB)
(74) Representative: Lally, William

(57) **Abstract**

A track system for (for example) a warehouse comprises an elongate track (6) in the form of a plane rail, being secured at spaced intervals along the length thereof to a floor surface (f) by fixing bolts (8), the fixing bolts passing through the track (6) and into the floor in conventional manner. The track system comprises twin ramp devices (10), each comprising a side wall (12) a sloping ramp portion (14), and a flange (16) extending laterally from the side wall (12) away from the sloping section (14). The wall (12) is of a height equal to that of the track, such that by clamping the flange (16) between the floor surface (f) and the underside of the track, the ramp device (10) may be secured in a desired position in abutment with the track. In an alternative construction the ramp device is of unity construction, comprising a flange (16a) which extends beneath the track, providing ramp surfaces (10a) on both sides of the track (6a).

## Description

This invention is concerned with improvements relating to surface mounted track systems, particularly of the kind, hereinafter referred to as being of the kind specified, in which elongate tracks, along which wheeled items may be moved, are bolted or otherwise secured to a floor surface.

Two types of such system are in common use, namely a first type in which the track may be adjusted in a height-wise manner relative to the floor, and a second type in which the track is bolted directly to the floor, the track thereby following floor contours, and it is with the second type that the present invention is primarily concerned.

Track systems of the kind specified are commonly used for storage, in for example libraries, in which racks are movable towards and away from one another on such track systems, to increase storage density, and also in warehouses such as supermarket warehouses.

Such tracks may be of the kind having an extensive flat upper surface, enabling a non-flanged (e.g. tyred) wheel to travel thereon, or a narrow upper surface for the accommodation of flanged wheels.

A problem exists with track systems of the kind specified, in that the tracks present an obstruction, either to personnel, who may inadvertently trip, or to bulk moving equipment such as pallet trucks.

Suggestions have been made to reduce these problems by locating the track in countersunk channels in the floor: this however is complicated and expensive, and provides location for the ingress and retention of dirt.

According to this invention there is provided a surface mounted track system comprising an elongate track, means for securing the track to a floor surface at spaced intervals, and a ramp device, the ramp device comprising an inclined ramp surface and one or more lateral protrusions by which the device may be clamped between the floor surface and the track in a desired position adjacent to the track.

The invention is primarily of advantage in track systems in which the securing means are provided by elements passing through the track into the floor.

Preferably the ramp device comprises an upright side wall, to be abutted with a side margin of the track, and a sloping region, which may be provided with friction-assisting formations such as serrations, the protrusions being provided by an elongate flange projecting laterally from the side wall.

Preferably the track system comprises two such ramp devices, clamped in position one either side of the track, and in such a construction preferably the two devices are identical.

Alternatively the ramp device may be of unitary construction with the flange extending beneath the track, providing ramp surfaces on both sides of the track.

Preferably the or each device is formed with a bias, such that on clamping of the device to the floor, the clamping force acts against the bias, to ensure that an outer edge margin of the device is pressed firmly against the floor, ensuring good contact despite possible small irregularities in the floor contour.

There will now be given detailed descriptions, to be read with reference to the accompanying drawings, of two track systems which have been selected for the purposes of illustration of the invention by way of example.

In the accompanying drawings:
**FIGURE 1** is a vertical sectional view of the track system which is the first embodiment of this invention, and
**FIGURE 2** is a vertical sectional view of the track system which is the second embodiment of the invention.

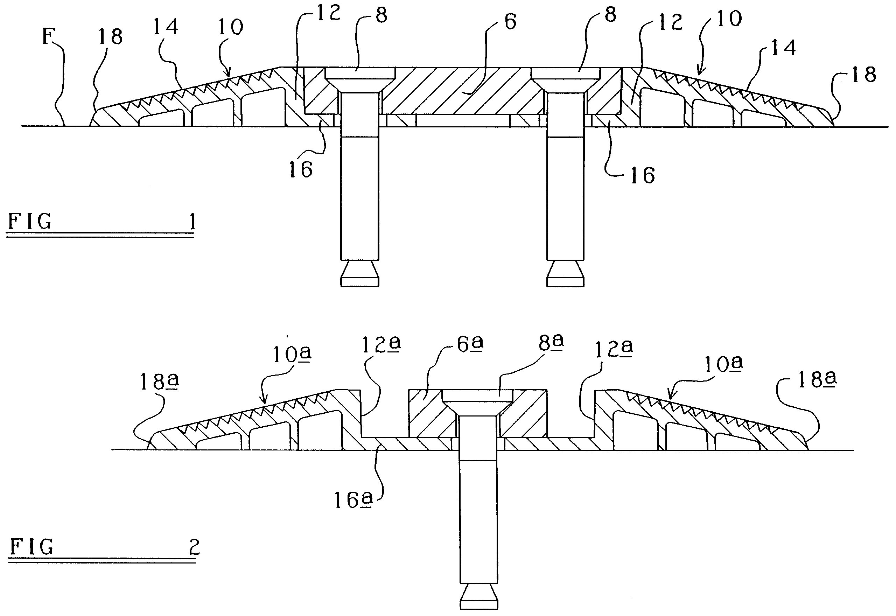

The track system illustrated in Figure 1 comprises an elongate track 6 in the form of a plain rail, being secured at intervals along the length thereof to a floor surface F by fixing bolts 8, the fixing bolts passing through the track 6 and into the floor in conventional manner, being received in countersunk apertures in the track.

The track system comprises twin ramp devices 10, each comprises a side wall 12 and a sloping portion 14, preferably serrated, and a flange 16 extending laterally from the side wall 12 away from the sloping section 14.

The wall 12, when measured from the top of the flange 16, is of a height equal to that of the track 6, such that by clamping the flange 16 between the floor surface F and the underside of the track 6, the ramp device 10 may be secured in a desired portion in abutment with the track, as shown.

If desired flange 16 may extend only a short distance from the wall 12, but preferably the flange extends a larger distance, with the bolts 8 passing through apertures in the flange 16.

The second embodiment, shown in Figure 2, in which similar numerals with the suffix a have been used to indicate like parts, illustrates the invention in its application to a guide tracks 6a for supporting a flanged wheel, in which the wall 12a of each of the ramp devices is retained a short distance from the side wall of the track 6a, for the accommodation of the wheel flanges.

In the second embodiment, a ramp device of unitary construction is utilised, comprising a flange 16a which extends beneath the track, and which provides ramp surfaces 10a on both sides of the track.

In both constructions the ramp devices are formed with a bias, so that on clamping of the flanges to the floor surface, the outer margins 18 are pressed firmly against the floor surface, ensuring good contact therewith.

If desired, and particularly in relation to the second embodiment, the ramp devices may be provided in a unitary construction, being located in position on a floor prior to securement to the floor of the track.

The features disclosed in the foregoing description, or the following claims, or the accompanying drawings, expressed in their specific forms or in the terms or means for performing the desired function, or a method or process for attaining the disclosed result, may, separately or in any combination of such features, be utilised for realising the invention in diverse forms thereof.

## Claims

1. A track system for use when secured to a floor surface (F), comprising an elongate track (6) having an upper surface on which the wheels of a carriage may run, and means (8) for securing the track to the floor surface at spaced intervals, wherein the system comprises a ramp device (10) comprising an inclined ramp surface (14) and one or more lateral protrusions (16) by which the device may be clamped between the floor surface (f) and the track (6) in a desired position adjacent to the track.

2. A track system according to Claim 1 wherein the securing means (8) is provided by elements passing through the track (6) into the floor (F).

3. A track system according to one of Claims 1 and 2 wherein the ramp device comprises an upright side wall (12), to be abutted with the side margin of the track (6), and a sloping region affording said ramp surface (14), said protrusions (16) being provided by an elongate flange projecting laterally from the side wall (12).

4. A track system according to Claim 3 wherein said sloping region is provided with friction-assisting formations.

5. A track system according to any one of the preceding claims comprising two such ramp devices (10), adapted to be clamped in position one on either side of the track (6).

6. A track system according to Claim 5 wherein the two devices (10) are identical.

7. A track system according to any one of Claims 1 to 4 wherein the ramp device (10) is of unitary construction, comprising a flange extending beneath the track, and providing ramp surfaces (14) on both sides of the track (6).

8. A track system according to any one of the preceding claims wherein the or each ramp device (10) is formed with a bias, such that on clamping of the device to the floor (F), the clamping force acts against the bias to ensure that an outer edge margin (18) of the device is pressed firmly against the floor.
